# EUROPEAN PATENT SPECIFICATION

(11) **EP 0 559 727 B1**
(45) Date of publication and mention of the grant of the patent: **17.04.1996**
(21) Application number: 92900272.3
(22) Date of filing: 05.12.1991
(51) Int. Cl.: B62B 3/00

(54) **STEERABLE WAGON HAVING CASTER-WHEELS**
LENKBARER WAGEN VERSEHEN MIT SCHWENKROLLEN
CHARIOT A DIRECTION ROULANT SUR ROUES PIVOTANTES

(30) Priority: 05.12.1990 SE 9003867
(43) Date of publication of application: 15.09.1993
(73) Proprietor: LINDBERG, Jan, S-714 00 Kopparberg (SE)
(72) Inventor: LINDBERG, Jan, S-714 00 Kopparberg (SE)
(74) Representative: Avellan-Hultman, Olle
(86) International application number: SE9100838
(87) International publication number: WO9210388

(56) References cited:
- FR-A- 2 274 489
- US-A- 2 530 886

## Description

The present invention generally relates to a wagon having a steering device and having four wheels arranged as two front wheels and two rear wheels, at least two of said four wheels being a caster-wheel, and in which said steering device comprises a rotatable steering handle which is mounted at an easily accessible place for the operator at the rear part of said wagon, as seen in the normal moving direction thereof, and which is arranged to transmit a rotary steering motion from said rotatable steering handle to one of said four wheels, said one wheel being a steerable caster-wheel comprising a rotatable wheel or roll supported by a wheel fork and mounted at a front bottom part of said wagon.

The invention is designed to guide all types of manually transportable objects such as transport wagons, customer wagons for shops, merchandise transport wagons, roller tables, hospital beds etc., provided with at least two so called caster-wheels.

Caster-wheels are wheels, which can be rotated about a vertical spindle. The caster-wheels are usually mounted in a wheel fork, bent at an angle and rotatable about a vertical spindle, which is laterally displaced in relation to the center of the wheel, the wheel, due to this construction, being automatically aligned along the driving direction of the wagon, the table, the bed etc.

The above-mentioned wagons usually are provided with four wheels, and at least two of the wheels are of the caster-wheel variety, sometimes all the four wheels. It may in many instances be a heavy and difficult chore to guide such wagons, and often the wagons have a tendency to run laterally instead of running straight on or along a curve as required. This is particularly true regaring such types of wagons or beds, if the "front-wheels" as well as the "rear wheels" are of the caster-wheel variety.

Many attempts to eliminate the problems with driving forwards wagons having caster-wheels have been carried out. Some solutions are based on the idea of limiting the possitility of rotating the caster-wheel, e.g. to an angle of 45^{o} in either direction in relation to a straight driving path of the wagon. Other solutions, e.g. those shown in DE-C-33 14 676 or GB-A-2 183 468, are based on the idea of altering the laterial displacement relation between the center of the caster-wheel and the rotational axie of the wheel fork, the wheel in certain situations being placed straight below the rotational axis of the caster-wheel and in other situation a short distance adjacent the same. These solutions do not provide a satisfactory result and also, the devices are expensive and complicated. According to another solution, shown in French patent 2 274 489, a wagon is provided with fixed front wheels and rear caster-wheels, one of the rear wheels being guidable by means of a solid rod. However, to guide the wagon by means of a rear wheel results in serious guiding problems: The wagon will when guided glide laterally in relation to the person driving the wagon, it probably is very difficult to drive the wagon around corners, e.g. in shops or hospital hallways, the solid rod requires strong hands to guide the wagon, particularly if the wagon is heavily loaded, etc.

It has proved to be possible and even very advantageous to guide wagons and beds etc. by influencing only one of the wheels, which are mounted in the front part of the wagon, as seen in the driving direction, and in this way to carry out or facilitate the steering of the wagon.

USA patent no. 4 300 782 relates to such a device, corresponding to the preamble of claim 1, comprising a steering wheel, which is mounted adjacent the bed frame of a hospital stretcher or a patient transport wagon and which, by means of two rigid rods, connected to each other via V-gears, and a complicated system of universal joints and telescopic shafts, makes possible a non-resilient rotation of one of the caster-wheels.

The illustrated device is complicated and expensive and implies that the entire wagon must be very stable in order to guarantee that the solid rods and the V-gears will function and provide a satisfactory steering of the wheel. Also, it may become tedious and difficult, and in many instances practically impossible, to actuate the guidable wheel, when the wagon is heavily loaded, particlarly when it is not driven. Also, it is impossible to avoid plays and guide problems in the universal joints caused thereby, in the V-gears and in the multiple telescopic shafts, which are required in order to lift and lower the stretcher.

Also, all the described solutions have the disadvantage, that they cannot be mounted on existing wagons, beds and stretches etc., but they require a special adaptation of the wagon as well as the guidable wheels of the wagon to the the guide device.

Consequently, the object of the present invention is to solve the problem described above and suggest a device designed to allow a guiding influence on a front caster-wheel, mounted on a wagon, a bed, a stretcher etc., the wagon or the bed being provided

with at least three but preferably four wheels, at least two of them being of the caster-wheel variety, and which device:
- it is easy and inexpensive to produce and mount;
- can be connected to existing caster-wheels without any substantial alteration of or addition to the wagon or the wheels;
- can be connected to any types of wagons and beds etc., regardless of the stability, the size and the construction of the wagon;
- is designed in such a way, that a guide actuation is carried out with a very small amount of energy;
- and with a larger or smaller elastic action, the guide energy successively influencing the caster-wheel; and
- has such characteristics, that the wagon or the bed etc. functions and can be used when influenced by the novel guide device as well as when not influenced by such a guide actuation, the wagon being used in the same way as a wagon without a guide device.

In accordance with the present invention the means for transmitting a rotary steering motion from said rotatable steering handle to said steerable caster-wheel is a flexible axle which is bendable in any desired path or loop, a first end of said flexible axle being connected to the steering handle, and a second end of said flexible axle extending through a hollow rotational spindle for the steerable caster-wheel and being fixedly connected to the wheel-fork of said steerable caster-wheel, and is which wagon said flexible axle is a resilient torsion axle yielding a torsion spring action to said steerable caster-wheel when the steering handle is being rotated, which torsion spring action is successively taken up by the steerable caster-wheel as a spring actuated successive turning movement.

The flexible axle is an axle, e.g. a bowden cable, which usually is made in roughly the same way as a wire, but it is wound in two directions in a plurality of layers on top of each other, with an alternating winding direction and it is capable of transferring torsional movements in the two directions and it is more or less resilient.

One advantage of the moderate resilience of the flexible axle is that the caster-wheel will be rotated with a non-direct and resilient guide action, and that the wheel will be rotated subsequent to the initiation of the wagon movement and during the driving of the wagon. Hence, the guide requires a very small amount of energy, also if the wagon is heavily loaded. The wheel is constantly connected to the actuation bar, regardless of whether the actuation bar is used or not, and the wagon performs well even if the guide device is not used, i.e. in the same way as a corresponding wagon without a guide device. If the wheel rotates, then the handle bar simply comes along, practically without any resistance whatsoever.

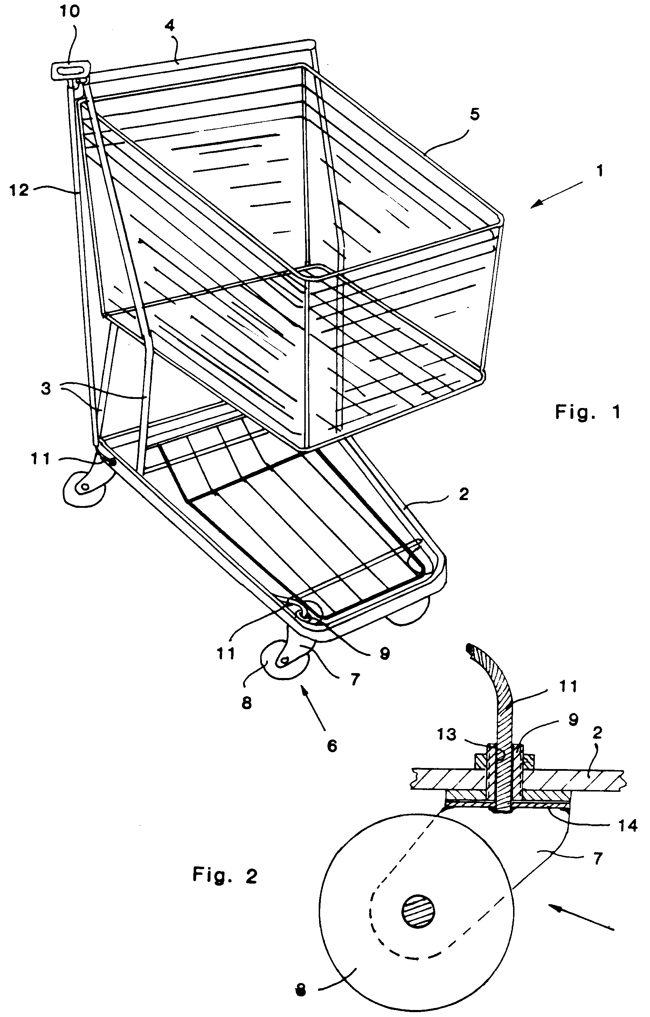

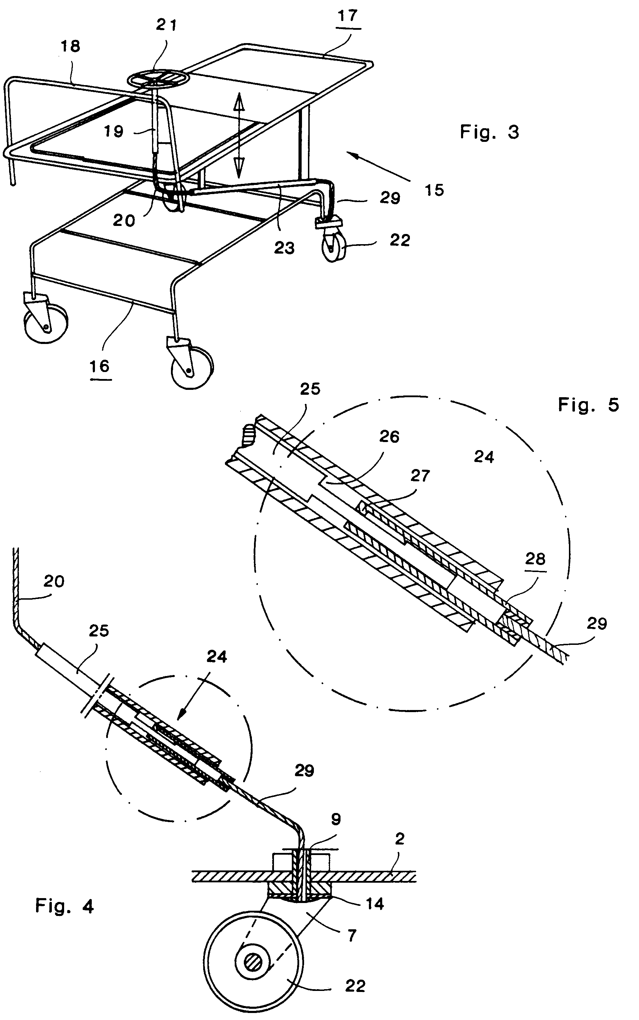

The present invention will now be described in more detail, with reference to the accompanying drawings, in which Fig. 1 is a schematic perspective view of a customer wagon, used in stores and designed with a guide device according to the invention, and in which Fig. 2 is a fragmentary cross-sectional view of a guidable caster-wheel. Fig. 3 shows very schematicly a hospotal bed or stretcher with a lifting bed frame. Fig. 4 shows the transmission system for the guide movement to the guidable caster-wheel "in the front part" of the bed, and Fig. 5 shows a magnification of the encircled portion of Fig. 4.

The present invention is shown in Figs. 1 and 2, applied to a transport wagon, designed as a "customer wagon for merchandise shops", which can be viewed as just one of many feasible fields of application. Customer wagon 1 has a supporting frame 2, designed as a hollow tube profile, and from this frame 2 two pairs of parallel holder tubes 3 extend upwards with an inclination, which tubes with their upper ends are connected to a transverse handle 4. Holder tubes 3 also support a wire basket 5 for merchandise.

The customer wagon runs on four so called caster-wheels 6 or possibly two fixed rear rolls and two front swingable rolls 6, which rolls are mounted at the respective corners of frame 2. Caster-wheels 6 comprise a wheel fork 7, which between its fork legs supports a wheel 8. The wheel can be rotated about a vertical spindle bolt 9, which is fastened to a part of frame 2. Wheel fork 7 is jointly with wheel 8 in a known way freely rotatably mounted about an imaginary vertical axis, which corresponds to the vertical axis of spindle bolt 9.

In order to make possible a guiding of the customer wagon one of the wheels, in this case the front right wheel, is guidable. For this purpose a handle bar 10 is rotatably mounted in a holder adjacent handle 4 of the customer wagon, easily and naturally accessible, when the wagon is pushed forwards. Handle bar 10 supports a flexible axle 11, i.e. a bowden cable or a wire of the type, which is wound in two different directions, alternately turn after turn. The flexible axle can be made with different sizes and stiffnesses. It is always more or less torsion-resilient, which is advantageous when the guide device is used. In this way the guiding will not be unresilient, but a certain torsion spring action on the wheel will result during the guiding. The spring force causes a successive rotation of the wheel, when the wagon is pushed forwards. Flexible axle 11 is mounted , in the illustrated case, in a guide tube 12 from handle bar 10 to an area adjacent the rear edge of the frame. Guide tube 12 is not designed to accomplish anything but retaining flexible axle 11 adjacent holder tubes 3. For the rest axle 11 is allowed to run freely in any desired curves. In order to retain axle 11 in its proper position, to avoid that it clings to some object in the store or disturbs the use of the customer wagon, it also at the rear edge of frame 2 enters a hole in the frame tube and is guided through this tube to an area adjacent to the rotatable front caster-wheel 6, in which area flexible axle 11 or the wire leaves the frame tube through another hole and is bent in a curve downwards to run through spindle bolt 9 of the caster-wheel, which for this purpose is hollow 13. Finally, axle 11 is fastened to wheel fork 7, e.g. by means of a lock plate 14 at its end, which lock plate is welded to wheel fork 7.

Tne described guide device does not interfere in any way with the normal function of the customer wagon, the transport carriage, the hospital bed etc. which can be used in a conventional way without influencing the guide device.

When the guide device is used, handle bar 10 is easily rotated a certain small angular distance, which corresponds to the desired swinging of the wagon. Normally caster-wheel 6 does not rotate, until the wagon starts moving, at least not when the wagon or the bed is loaded, but due to the torsion action of flexible axle 11 the caster-wheel is influenced by a certain torsional force , which force makes wheel 6 turn successively in that direction and with that angle as compared to the longitudinal direction of the wagon, which is obtained by turning the handle bar.

Of course, it is possible to guide two or several wheels alternately or simultaneously in the same way as has been described above. Normally, this is not necessary, and it may in certain cases be disadvantageous. A satisfactory guiding function is obtained by guiding only one of the four wheels, but if for special reasons two wheels are to be guided in parallel, it is easy to use two flexible axles, which are rotated simultaneously, using the same handle bar.

It is evident that the invention can be applied also to wagons and the like, which have two rear but only one front wheel, the latter being of the caster-wheel variety and designed to be guidable. It is also evident, that the wagon can be designed with non-rotatable rear wheels and two front caster-wheel, one of the front wheels being designed as a guidable wheel in the way described above.

Hospital bed or stretcher 15, shown in Fig. 3, has a frame 16 and bed frame 17, which latter can be lifted and lowered from the frame, shown by the bidirectional arrow in Fig. 3. For the sake of clearness all connections between the frame and the bed frame and all means of lifting and lowering the bed frame have been omitted. In its rear end the bed is provided with an arch 18, by means of which the bed can be pushed forwards. A guide device for the bed is mounted on arch 18 and comprises a guide tube 19, which is fastened to arch 18 of the bed frame and is designed to retain a flexible guide axle or guide wire 20 as well as to carry a steering wheel 21, by means of which front right caster-wheel 22 can be controlled. It is important that caster-wheel 22 can be rotated to any 360^{o} angle, if the bed is to be swung into any desirable position and into any direction. Flexible axle 20 is fastened to steering wheel 21 and extends through guide tube 19, in a free arc to a second guide tube 23, which is fastened to bed frame 17, and all the way to an area adjacent and above guidable caster-wheel 22. Guide tube 23 is also mainly designed to retain the flexible axle. The end of flexible axle 20 is fastened to wheel fork 7 of the caster-wheel in the same way as has been described in connection with Fig. 2 above.

In order to allow a lifting and a lowering of bed frame 17 in relation to frame 16 flexible wire 20 can be bent in a curve, which allows such a lifting and lowering while the possibility to guide caster-wheel 22 is not impaired. However, such a curve might interfere with the handling of the bed, and for this reason a telescopic coupling 24 has been mounted in guide tube 23. Axle 20, which is fastened to the steering wheel, is also fastened to a guide rod 25, which is enclosed in guide tube 23 and has an external diameter which mainly corresponds to the internal diameter of guide tube 23. Guide rod 25 is, at least on one of its sides, provided with a groove 26, in which a shoulder 27 on a receiving rod 28 is slidable a small distance forwards and backwards. Receiving rod 28 carries a piece of flexible wire 29, which constitutes a part of the aggregate length of axle 20 and which is the same part which is fastened to wheel fork 7 of the guidable caster-wheel. Receiving rod 28 is also enclosed in guide tube 24, and the two rods 25 and 28 are retained in this way in a connected position and in a position, in which wire part 29 with the receiving rod can be displaced a small distance in relation to guiding rod 25, corresponding to the lifting and the lowering respectively of the bed frame in relation to the frame.

The rear wheels on the bed in Fig. 3 are shown in the form of caster-wheels, but it is advantageous to design them as non-rotatable. If the rear wheels are fixed, the handling of the bed and the swinging of it into desired positions are facilitated. Alternately the "rear wheels" can be designed in such a way that they as required alternately can be rotated about a vertical axis or can be locked in a position in order to be able to push the bed straight on or rearwards.

### REFERENCE NUMERALS

- 1: custom wagon
- 2: frame
- 3: holder tubes
- 4: handle
- 5: wire basket
- 6: caster-wheel
- 7: wheel fork
- 8: drive wheel
- 9: spindle(bolt)
- 10: handle bar
- 11: flexible axle
- 12: guide tube
- 13: axle hole (hollow)
- 14: lock plate
- 15: bed
- 16: frame
- 17: bed frame
- 18: arch
- 19: guide tube
- 20: flexible axle
- 21: steering wheel
- 22: guidable caster-wheel
- 23: guide tube
- 24: telescopic coupling
- 25: guide rod
- 26: groove (in 25)
- 27: shoulder (on 28)
- 28: receiving rod
- 29: wire

## Claims

1. A wagon (1; 15), having a steering device, and having four wheels arranged as two front wheels and two rear wheels, at least two of said four wheels being a caster-wheel, and in which said steering device comprises a rotatable steering handle (10; 21) which is mounted at an easily accessible place for the operator at the rear part of said wagon (1; 15), as seen in the normal moving direction thereof, and which is arranged to transmit a rotary steering motion from said rotatable steering handle (10; 21) to one of said four wheels, said one wheel being a steerable caster-wheel (6) comprising a rotatable wheel or roll (8; 22) supported by a wheel fork (7) and mounted at a front bottom part of said wagon (1; 15), **characterized**
in that the means for transmitting a rotary steering motion from said rotatable steering handle (10; 21) to said steerable caster-wheel (6) is a flexible axle (11; 20, 24, 29) which is bendable in any desired path or loop, a first end of said flexible axle (11; 20, 24, 29) being connected to the steering handle (10; 21), and a second end of said flexible axle (11; 29) extending through a hollow rotational spindle (9) for the steerable caster-wheel (6) and being fixedly connected to the wheel-fork (7) of said steerable caster-wheel,
and in that said flexible axle is a resilient torsion axle (11; 20, 29) yielding a torsion spring action to said steerable caster-wheel (7, 8; 22) when the steering handle (10; 21) is being rotated, which torsion spring action is successively taken up by the steerable caster-wheel as a spring actuated successive turning movement.

2. A wagon according to claim 1, **characterized** in that said flexible axle (11; 20, 29) is a bowden cable or a wire which is wound in two opposite directions in alternating layers.

3. A wagon according to claim 1 or 2, **characterized** in that said flexible axle (11; 20, 29) is fixedly connected to the wheel fork (7) in axial alignment with the center line of said rotational spindle (9) of the steerable caster-wheel (6).

4. A wagon according to claim 3, **characterized** in that said flexible torsion axle (11; 20, 29) extends through a supporting frame comprising a hollow tube (12; 19, 23), said supporting frame being positioned between said rotatable steering handle (10; 21) and said steerable caster-wheel (8; 22).

5. A wagon according to any of claims 1-4, **characterized** in that said rotatable steering handle (10; 21) is mounted adjacent a push handle (4; 18) for said wagon (1; 15).

## Patentansprüche

1. Wagen (1;15) mit einer Lenkeinrichtung und vier Rädern, die als zwei Vorderräder und zwei Hinterräder angeordnet sind, wobei zumindest zwei der vier Räder Schwenkräder sind, und wobei die Lenkeinrichtung einen drehbaren Steuerhandgriff (10;21) aufweist, welcher, gesehen in der normalen Bewegungsrichtung des Wagens, an einem für den Bediener leicht zugänglichen Ort an der Rückseite des Wagens (1;15) montiert ist, und welcher so angeordnet ist, daß er eine lenkende Drehbewegung von dem drehbaren Steuerhandgriff (10;21) zu einem der vier Räder überträgt, wobei das eine Rad ein lenkbares Schwenkrad (6) ist, das ein drehbares Rad oder eine drehbare Rolle (8;22) aufweist, das bzw. die von einer Radgabel (7) gestützt ist und am vorderen Unterteil des Wagens (1;15) montiert ist, **dadurch gekennzeichnet**,
daß die Einrichtung zum Übertragen der steuernden Drchbewegung von dem drehbaren Steuerhandgriff (10;21) zu dem steuerbaren Schwenkrad (6) eine flexible Welle (11;20,24,29) ist, welche in einen beliebigen gewünschten Pfad oder eine Schleife biegbar ist, wobei ein erstes Ende der flexiblen Welle (11;20,24,29) mit dem Steuerhandgriff (10;21) verbunden ist und ein zweites Ende der flexiblen Welle (11;29) sich durch eine drehbare Hohlspindel (9) für das steuerbare Schwenkrad (6) erstreckt und fest mit der Radgabel (7) des steuerbaren Schwenkrads verbunden ist,
und daß die flexible Welle eine elastisch federnde Torsionswelle (11;20,29) ist, die eine Drehfederbetätigung des steuerbaren Schwenkrads (7,8;22) hervorbringt, wenn der Steuerhandgriff (10;21) gedreht wird, wobei die Drebfederbetätigung von dem steuerbaren Schwenkrad als federbetätigte schrittweise Drehbewegung schrittweise aufgenommen wird.

2. Wagen nach Anspruch 1, dadurch gekennzeichnet, daß die flexible Welle (11;20,29) ein Boudenzug oder ein Draht ist, welcher in abwechselnden Schichten in zwei entgegengesetzten Richtungen gewunden ist.

3. Wagen nach Anspruch 1 oder 2, dadurch gekennzeichnet, daß die flexible Welle (11;20,29) in axialer Flucht zur Mittellinie der drehbaren Spindel (9) des steuerbaren Schwenkrads (6) fest mit dar Radgabel (7) verbunden ist.

4. Wagen nach Anspruch 3, dadurch gekennzeichnet, daß die flexible Torsionswelle (11;20,29) sich durch einen Stützrahmen hindurch erstreckt, der ein Hohlrohr (12;19,23) aufweist, wobei der Stützrahmen zwischen dem drehbaren Steuerhandgriff (10;21) und dem steuerbaren Schwenkrad (8;22) angeordnet ist.

5. Wagen nach einem der Ansprüche 1 bis 4, dadurch gekennzeichnet, daß der drehbare Steuerhandgriff (10;21) angrenzend an einen Schubhandgriff (4;18) für den Wagen (11:15) montiert ist.

## Revendications

1. Chariot (1;15) comportant un dispositif d'orientation et comportant quatre roues disposées sous la forme de deux roues avant et de deux roues arrière, au moins deux desdites quatre roues étant agencées sous la forme d'une roue pivotante, et dans lequel ledit dispositif d'orientation comprend une poignée d'orientation tournante (10;21), qui est montée en un emplacement aisément accessible a l'opérateur, sur la partie arrière dudit chariot (1;15), lorsqu'on regarde dans la direction normale de déplacement du chariot, et qui est agencée de manière à transmettre un mouvement rotatif d'orientation depuis ladite poignée d'orientation tournante (10;21) à l'une desdites quatre roues, ladite roue étant une roue pivotante (6) comprenant une roue ou une roulette tournante (8,22) supportée par une fourche (7) et montée sur une partie inférieure avant dudit chariot (1;15), caractérisé
en ce que les moyens pour transmettre un mouvement rotatif d'orientation depuis ladite poignée d'orientation tournante (10;21) à ladite roue pivotante orientable (6) sont un axe flexible (11;20,24,29), qui peut être arqué conformément à n'importe quel trajet ou boucle désiré, une première extrémité dudit axe flexible (11;20,24,29) étant raccordée à la poignée d'orientation (10;21), et une seconde extrémité dudit axe flexible (11;29) s'étendant à travers une broche rotative creuse (9) prévue pour la roue pivotante orientable (6) et étant raccordée de façon fixe à la fourche (7) de ladite roue pivotante orientable, et
en ce que ledit axe flexible est un axe élastique de torsion (11;20,29) appliquant une action de ressort de torsion à ladite roue pivotante orientable (7,8;22) lorsqu'on fait tourner ladite poignée d'orientation (10:21), cette action de ressort de torsion étant reçue successivement par la roue pivotante orientable en tant que mouvement tournant successif activé par un ressort.

2. Chariot selon la revendication 1, caractérisé en ce que ledit axe flexible (11;20,29) est un câble Bowden ou un fil, qui est enroulé dans deux directions opposées suivant des couches alternées.

3. Chariot selon la revendication 1 ou 2, caractérisé en ce que ledit axe flexible (11;20,29) est raccordé de façon fixe à la fourche (7) de la roue d'une manière alignée axialement avec l'axe central de ladite broche rotative (9) de la roue pivotante orientable (6).

4. Chariot selon la revendication 3, caractérisé en ce que ledit axe de torsion flexible (11:20,29) s'étend à travers un cadre de support comprenant un tube creux (12:19,23), ledit cadre de support étant disposé entre ladite poignée d'orientation tournante (10;21) et ladite roue pivotante orientable (8;22).

5. Chariot selon l'une quelconque des revendications 1-4, caractérisé en ce que ladite poignée d'orientation tournante (10:21) est montée au voisinage d'une poignée (4;18) permettant de pousser ledit chariot (1:15).
